# EUROPEAN PATENT APPLICATION

(11) **EP 2 286 926 A2**
(43) Date of publication of application: **23.02.2011**
(21) Application number: 10171223.0
(22) Date of filing: 29.07.2010
(51) Int. Cl.: B05B 7/14, B65G 53/28

(54) **Powder transport method and system for transporting powder constantly and smoothly**

(30) Priority: 18.08.2009 CN 200910163757
(71) Applicant: Yu Tung Investment Holdings Limited, Hong Kong (HK)
(72) Inventor: Ko, Mickey, Man Kin, Hong Kong (CN)
(74) Representative: Johansson, Lars-Erik

(57) **Abstract**

A powder transport method for transporting powder (9) constantly and smoothly by a device (1a,1b) comprising a transfer chamber (3a,3b) into which a supply line (6a,6b) and a discharge line (8) open; a piston (11a,11b) for generating negative pressure; a compressed gas passage (12a,12b) through which compressed gas is injected into the transfer chamber (3a,3b); and a compressed gas control means (7), the method comprises: the discharge line (8) is being closed when the piston (11) reaches top dead center; then the supply line (6) is closed; after a first predetermined time, compressed gas is injected into the transfer chamber (3) in a manner that the total amounts of compressed gas injected are the same, then the discharge line is opened; after a second predetermined time, the piston starts its downward stroke; at the first predetermined time before the piston reaches bottom dead center, the injection of compressed gas is ceased; and the discharge line is closed and the supply line is opened.

## Description

### FIELD OF THE INVENTION

The present invention relates to a powder transport method for transporting powder constantly and smoothly at different flow rates, and a powder transport system for transporting powder with this method.

### BACKGROUND OF THE INVENTION

Numerous known devices for transporting powder operate according to the venturi principle, in which the powder is carried along by an air stream. Such devices are simple in construction but they have three serious disadvantages:
First, the powder density that can be achieved in the air stream is very low and the powder is transported by air-borne entrainment, i.e. the air velocity must be greater than the suspension velocity. Second, the consistency of the quantity of powder transported over a period of time is totally inadequate. Third, the quantity of powder is difficult to accurately regulate. These disadvantages are especially serious when such pumps based on the venturi principle are employed to transport powder paints, since the resulting coatings demonstrate substantial fluctuations in film thickness and visual qualities over time.

Consequently, in recent past, solutions have been sought which do not operate on the venturi principle. In the last few years, different dense flow technologies have been developed.

A device is known from EP 1 106 547 Al in which powder is transported pneumatically into what is termed a metering chamber. This metering chamber is connected to a suction line. The metering chamber is further connected to a pressure line, through which the powder is transported from the metering chamber into a discharge line.

In order to generate negative pressure in the suction line, this device requires an external device outside the metering chamber to generate negative pressure, for example, a vacuum pump. A control mechanism must be located between the pump and the metering chamber by which the passage for the air can be closed off and opened. So that the powder flowing into the metering chamber cannot enter the suction line, the line is separated from the metering chamber by an air permeable diaphragm. The problem with this prior art invention is that depending on the formulations and characteristics of the powder transported by this device, the diaphragm tends to become blocked or clogged, which naturally has a deleterious effect on the smooth operation of the device.

A second diaphragm pump for transporting powders is known from EP 0 124 933. It describes a pump having a piston which is moved up and down in a transfer chamber. The piston generates negative pressure in the supply line on its upward path and sucks the powder out of the storage tank. Afterwards the powder is compressed in the transfer chamber by a downward movement of the piston. After the piston has reached bottom dead center, the discharge line is opened and the compressed powder is transported by means of compressed air to the application station.

In order to generate negative pressure, the piston must be sealed by a gasket, which leads to extreme wear and contamination of the moving parts.

This pump generates a very inconsistent powder/air volume flow. Furthermore, easily wettable powders, such as curable powder paints, easily cause blockages of the transfer chamber because of the compression prior to being transported.

This is probably the reason why this type of construction has not been accepted for the transportation of powder paints.

According to U.S. 3,391,963, blockage by powder of a diaphragm in a transportation device is to be prevented by moving the diaphragm back and forth by means of a piston. The diaphragm undulates, and the powder adhering thereto can be shaken off. This device operates without the provision of compressed air to the transfer chamber. This device is expensive and susceptible to wear, since it requires a semi-permeable diaphragm. Additionally, the major part of the powder adhering is removed by the mechanical movement of the diaphragm. However, small amounts of powder remain on the surface of the diaphragm so that clogging can be observed after an extended period of operation.

A further invention of piston pump for transporting powder is known from EP 1 427 536, as shown in Fig. 5. This transport system comprises two or more devices 1' to control a constant powder flow rate, in which each device has a transfer chamber 3' into which a supply line 6' and a discharge line 8' for the powder open, and a piston 11' movable up and down within the transfer chamber 3'. The piston generates negative pressure in the supply line on its upward path and sucks the powder 9' out of storage tank 10' to the transfer chamber. Afterwards on the downward stroke of the piston the powder is compressed in the transfer chamber and after the discharge line is opened, the powder gets transported to the application station 15' with the assistance of injecting compressed gas into the transfer chamber. Generally, a complete powder transport system comprises two devices mentioned above, and ensures non-synchronous reciprocal movement of the individual pistons in the devices. The term "non-synchronous" is understood to mean here and in what follows that the pistons are not moving in the same direction and are not in the same place at a specific point of time of their operation.

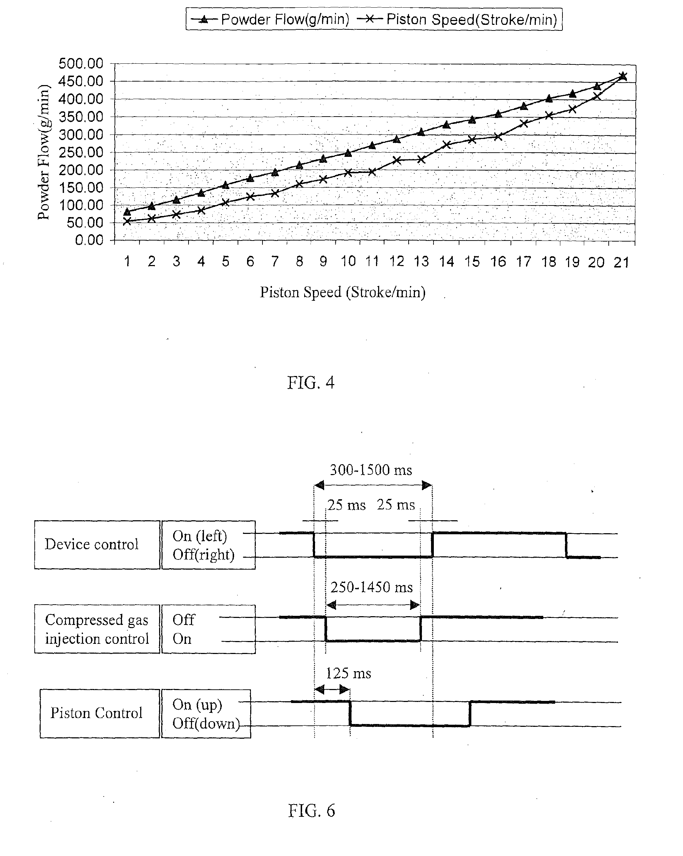

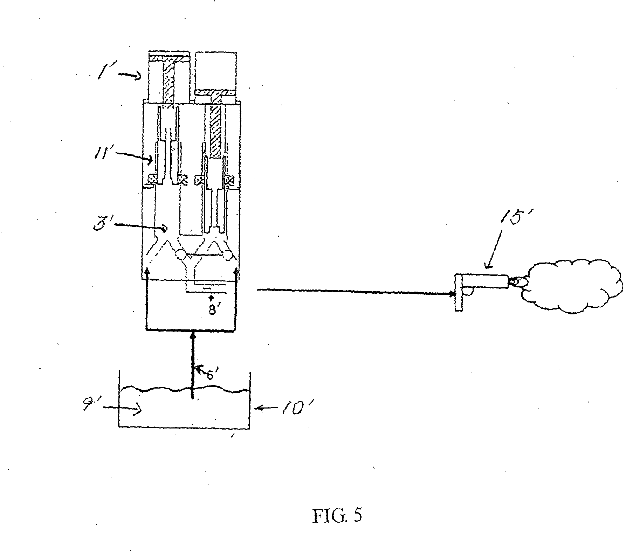

Fig. 6 illustrates a schematic diagram of timing control of the powder transport system shown in Fig. 5. The system controls movement direction of each device by virtue of a control unit, to ensure the non-synchronous reciprocal movement of the individual pistons. For example, the selection of device at left side or one at right side could be realized by means of different level signal, as shown in Fig. 6. In this powder transport system, the amount of powder sucked into the transfer chamber is constant in each stroke cycle of the piston. Therefore, the powder flow rate, i.e. the powder delivery ratio, in the system could be adjusted by the piston speed. Generally, the range of the piston speed is, for example, about 300-1500ms/stroke. In this system, the compressed gas is injected to the transfer chamber in the follow manner. The injection of compressed gas into the transfer chamber is started at 25ms after the piston reaches top dead center (TDC), and the piston starts downward stroke at 100ms after the injection of compressed gas. Similarly, the injection of compressed gas is ceased at 25ms before the piston reaches bottom dead center (BDC), and the piston starts upward stroke at 100ms after the piston reaches bottom dead center. Therefore, in accordance with the piston speed, the range of the injection duration of the compressed gas is 250-1450ms accordingly.

When different coating thicknesses are demanded, different powder flow rates are needed. As mentioned above, the different powder flow rates are realized by means of different piston speeds. However, when the piston speed is decreased, i.e., when the amount of piston stroke cycles during unit period is decreased and the period of each piston stroke cycle is increased, the injection duration of compressed gas would be increased. Thus, the amount of compressed gas injected into the individual transfer chamber is increased accordingly, which makes the mixture ratio of compressed gas to powder to be changed, and results in unstable and irregular powder flow rate.

Therefore, when different piston stroke speeds are needed due to the demand of different flow rates, the output of the powder from the pump would become irregular, and the powder being delivered will start to surge and spit. This is most often encountered when the powder output is being decreased. This surging or spitting creates an inconsistent powder output which will result in an uneven coating thickness and defects in the coating surface. Therefore, to ensure constant and smooth powder flow in the powder transport system of the prior art, the working window for the ratio of minimum to maximum powder delivery quantity has to be limited to a narrow range of 1:2 or less.

### SUMMARY OF THE INVENTION

The object of the present invention is to provide a novel powder transport method based on the prior art of EP 1 427 536, which could ensure a constant and smooth powder delivery in a wider range of ratio of minimum to maximum powder delivery quantity.

The object is achieved by a powder transport method for transporting powder constantly and smoothly at different powder flow rates by means of a device, and the device comprises: a transfer chamber into which a supply line and a discharge line for the powder open; a piston movable in the transfer chamber for generating negative pressure therein; a compressed gas passage in communication with a compressed gas source and through which compressed gas is injected into the transfer chamber; and a compressed gas control means for controlling the compressed gas source to inject compressed gas into the transfer chamber, in which the powder is sucked into the transfer chamber by the movement of the piston from its initial position, and then the compressed gas is injected into the transfer chamber and afterwards the piston returns to the initial position. The method comprises: the discharge line is in a closed state when the piston has reached top dead center in its stroke; then the supply line is closed; after waiting for a first predetermined time, the compressed gas is injected into the transfer chamber continuously in one time segment or intermittently in several time segments according to piston speed in a manner that the total amount of compressed gas injected is the same, and then the discharge line is opened; after waiting for a second predetermined time, the piston starts its downward stroke; at the first predetermined time before the piston has reached bottom dead center, the injection of compressed gas is ceased; and the discharge line is closed and the supply line is opened.

In a preferred embodiment of the present method, the closing of the supply line is not at the same time as the opening of the discharge line. In particular, the supply line is closed firstly, and then the discharge line is closed.

In an example of the present invention, in the case that the amount of gas injected within each upward and downward stroke cycle of the piston is the same, compressed gas is injected into the transfer chamber continuously in one time segment or intermittently in several time segments at a constant flow rate. In particular, compressed gas is injected into the transfer chamber in a manner that the total amounts of the compressed gas injected into the transfer chamber or the total injection durations within each piston stroke cycle are the same at different piston speeds. Or, in the case that the amount of gas injected within each upward and downward stroke cycle of the piston is the same, compressed gas is injected into the transfer chamber continuously at a variable flow rate, in which the variable flow rate of the compressed gas is in proportion to the piston speed.

The piston speed may be adjustable in a predetermined range. For example, the piston speed may be adjustable in a range of 300-1500ms/stroke. Therefore, the first predetermined time is 25ms, while the second predetermined time is 100ms. However, according to the demand of the ratio of minimum to maximum powder delivery quantity, the piston speed may be adjustable in a different range, while the first predetermined time and the second predetermined time could also be set according to actual request.

Thus, the present method could ensure that the ratio of minimum to maximum powder delivery quantity is controlled to be 1:3 or above. Preferably, the ratio of minimum to maximum powder delivery quantity is set as 1:4, 1:5, 1:6 or above.

The object of the present invention is realized by a powder transport system for transporting powder constantly and smoothly at different powder flow rates comprising a plurality of devices, where each device comprises: a transfer chamber into which a supply line and a discharge line for the powder open; a means for generating negative pressure in the transfer chamber which includes a piston movable in the transfer chamber; a compressed gas passage in communication with a compressed gas source and through which compressed gas is injected into the transfer chamber; and a compressed gas control means for controlling the compressed gas source to inject compressed gas into the transfer chamber to ensure that the total amount of compressed gas injected into the transfer chamber is the same at different piston speeds.

Here and in what follows, the term "transfer chamber" is understood to mean that part of the device which is accessible to the powder when the piston is at top dead center. However, the supply line and the discharge line are not included in the transfer chamber.

The piston moves in the transfer chamber. This is understood to mean that the top face of the piston passes through a part of the transfer chamber during the motion of the piston. That part of the cylinder chamber which is necessary due to the construction of the piston when it is at top dead center is connected to the upper part of the transfer chamber. This part of the cylinder chamber is not accessible to the powder to be transported.

According to a preferred embodiment of the present invention, the transport system may further comprise a control unit for ensuring non-synchronous reciprocal movement of the individual pistons. The term "non-synchronous" is understood to mean here and in what follows that the pistons are not moving in the same direction and are not in the same place at a specific point of time of their operation.

Each of the devices is connected to a common application station or consumption point.

According to another similar preferred embodiment of the present invention, the discharge line is connected to the common application station or consumption point. With the present manner together with the manner mentioned above, the powder flow rate could be further raised with the increase of the piston speed.

In a further specially preferred embodiment of the present invention, the transport system comprises two or more devices. This embodiment represents, according to the previous findings, an optimum in consistent powder flow rate with respect to an embodiment of the present invention which is as simple and low-cost as possible.

As the amount of powder sucked into the transfer chamber is the same during each piston stroke cycle, the powder delivery ratio could be changed by adjusting the piston speed within a predetermined range. For example, the piston speed could be adjusted in a range of 300-1500ms/stroke.

To ensure constant and smooth delivery of powder at different piston speeds, the mixture ratio of compressed gas to powder in the transfer chamber should be kept constant. The system of the present invention could achieve this goal by controlling the total amount of compressed gas injected into the transfer chamber to be the same within each piston stroke cycle.

In an example of the present invention, the system could control the total amounts of compressed gas injected into the transfer chamber to be the same in the following manner. Firstly, the compressed gas control means controls the compressed gas source to inject compressed gas into the transfer chamber intermittently in one time segment or several time segments at a constant flow rate. In particular, the compressed gas control means controls the compressed gas source to inject compressed gas into the transfer chamber intermittently in a manner that the total injection durations of compressed gas into the transfer chamber within each piston stroke cycle are the same at different piston speeds. Secondly, the compressed gas control means controls the compressed gas source to inject compressed gas into the transfer chamber continuously at a variable flow rate, in which the variable flow rate of compressed gas is in proportion to the piston speed.

Thus, the present method could ensure that the ratio of minimum to maximum powder delivery quantity is controlled to be 1:3 or above. Preferably, the ratio of minimum to maximum powder delivery quantity is set as 1:4, 1:5, 1:6 or above.

The specially preferred transport system of the present invention is such a system in which the compressed gas passage is in communication with the transfer chamber above bottom dead center of the piston. The least aggressive gas distribution possible in the transfer chamber could be achieved in this manner.

The piston may be connected to a drive unit to be driven. In this way, extremely simple drive units could to utilized to drive the piston, for example, simple pneumatically powered compressed air cylinders.

The method and the corresponding device in accordance with the present invention have an application in industrial powder coating in particular. The powder transport system and method according to the present invention are especially suitable for use in the automobile industry and other coating industries for clear coats and colored base coats.

### BRIEF DESCRIPTION OF THE DRAWINGS

The present invention will be described in detail with reference to the accompanying drawings, in which,
Fig. 1 is a schematic view of an embodiment of a powder transport system according to the present invention;
Fig. 2 is a schematic diagram of a first embodiment of timing control of the powder transport system shown in Fig. 1;
Fig. 3 is a schematic diagram of another embodiment of timing control of the powder transport system shown in Fig. 1;
Fig. 4 is a curve diagram of the typical powder transport effect of the powder transport system according to the present invention;
Fig. 5 is a schematic view of a powder transport system in the prior art; and
Fig. 6 is a schematic diagram of timing control of the powder transport system shown in Fig. 5.

### List of reference numbers

| | | | |
|---|---|---|---|
| 1a, 1b, 1' | device | 10, 10' | powder storage tank |
| 2a, 2b | cylinder | 11a, 11b, 11' | piston |
| 3a, 3b, 3' | transfer chamber | 12a, 12b | compressed gas passage |
| 4a, 4b | drive unit | 13a, 13b | upper air passage |
| 5a, 5b | piston | 14a, 14b | lower air passage |
| 6, 6a, 6b, 6' | supply line | 15, 15' | application station |
| 7 | shut-off mechanism | 16 | control unit |
| 8, 8a, 8b, 8' | discharge line | 17 | compressed gas control means |
| 9, 9' | powder | | |

### DETAILED DESCRIPTION OF THE INVENTION

Exemplary embodiments of the present application and the description thereof are for illustration purpose only, and should not be construed as limitation to the protective scope of the present invention.

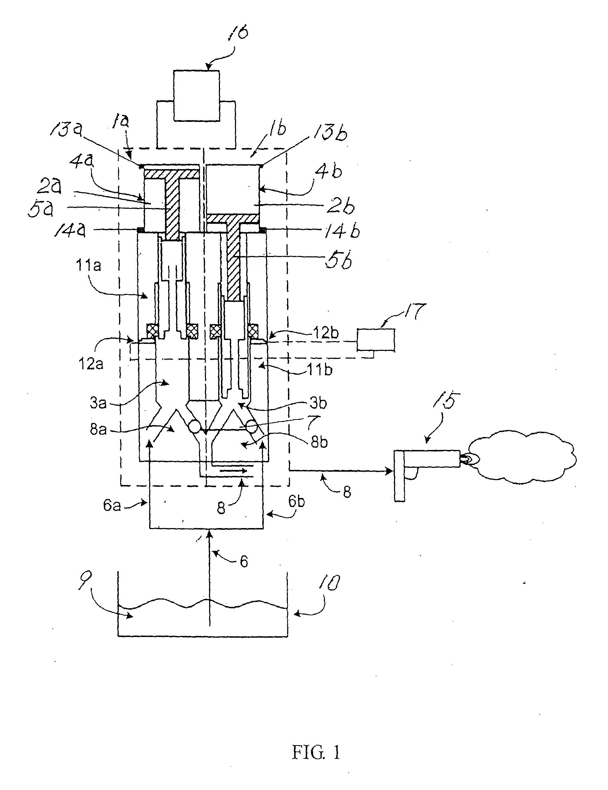

Fig. 1 illustrates a powder transport system according to the present invention with which powder 9 could be transported from a powder storage tank 10 to an application station 15, where a powder gun is being used in this example for the application station.

In this example, the transport system consists of two devices 1a and 1b, identically constructed but operated in opposite directions. Obviously the transport system may have more than two devices as mentioned above, depending on the quantities of powder which have to be transported to the application station and to what degree this must be surge free.

The powder 9 is transported over a common supply line 6 which divides into supply lines 6a and 6b. Both supply lines 6a and 6b open into their own transfer chamber 3a and 3b. From the transfer chambers 3a and 3b, the powder passes through discharge lines 8a and 8b into a common discharge line 8 leading to the application station 15. Shut-off mechanisms 7 are provided for the supply lines 6a and 6b and the discharge lines 8a and 8b respectively, to open or close those lines.

A piston 11a of the device 1a is positioned at top dead center, and a compressed gas passage 12a through which compressed gas is supplied to the transfer chamber 3a is positioned between top dead center and bottom dead center of the piston.

Fig. 1 also shows drive units 4a and 4b. In the present embodiment, the drive unit 4a of the device 1a is configured as a piston-cylinder unit powered by pressure means. It could also be configured as a mechanical drive unit, for example, as an eccentric drive or crank drive or as an electromagnetic drive unit. The piston 5a of the drive unit 4a which could be moved in a cylinder 2a by the pressure means, air for example, is connected to a piston 11a, to move the piston 11a up and down in the transfer chamber 3a. An upper air passage 13a and a lower air passage 14a serve to apply pressure by means of compressed gas, air for example, to the piston 5a to move the piston 5a up and down in the cylinder 2a. The air passages 13a and 14b are connected to a two-way valve which in turn is attached to a compressed gas source. Depending on the position of the two-way valve, one of the two air passages 13a and 14a has compressed gas applied, while the other one is connected to a vent.

A piston 11b, a compressed gas passage 12b, a cylinder 2b, a piston 5b, an upper air passage 13b and a lower air passage 14b of the device 1b are identical to those of the device 1a, and would not be described in details herein.

To ensure non-synchronous reciprocal movement of the individual pistons in the devices, the system further comprises a control unit 16.

In addition, the compressed gas passages 12a and 12b of the present powder transport system are connected to the compressed gas source (not shown in figures) via a compressed gas control means 17 respectively, to inject compressed gas into the transfer chambers 3a and 3b under the control of the compressed gas control means 17.

The operation of the above-mentioned devices would be described in details herein taking the device 1a as an example. Firstly, the drive unit 4a drives the piston 11a to move away from the transfer chamber 3a. At this time, the shut-off mechanism in the discharge line 8a is closed. Due to the movement of the piston 11a, a negative pressure is generated within the transfer chamber 3a. At the same time, the shut-off mechanism in the supply line 6a is opened, thus powder is sucked into the transfer chamber 3a from the powder storage tank 10. As the powder sucked by the supply line 6a has already been fluidized and distributed in gas or gas mixture within the powder storage tank 10, it possesses free flowing characteristic and good transportability. For most cases, the gas mixture is air. However, in the case of sensitive powdery materials, for example those that react or cross-link in an undesirable fashion with oxygen, another gas or gas mixture, for example an inert gas, can be used. After sufficient powder has flowed into the transfer chamber 3a, the shut-off mechanism in the supply line 6a is closed. Compressed gas is introduced through the compressed gas passage 12a and into the transfer chamber 3a. At the same time, the shut-off mechanism in the discharge line 8a is opened so that the powder present in the transfer chamber 3a is forced out through the discharge line 8a. This ejection of the powder by means of compressed gas can occur before the piston 11a has reached its final position where it is farthest away from the transfer chamber 3a. This allows the powder transported through the device to be metered precisely. After the suction piston 11a has returned to its initial position, a new transport cycle can begin.

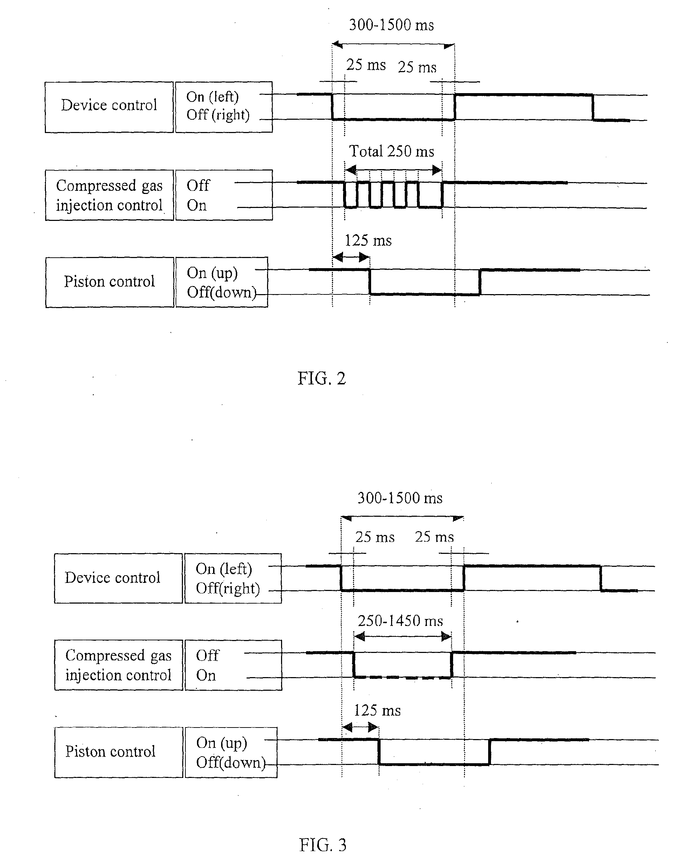

In the powder transport system of the present invention, the movement speed of the pistons 11a and 11b for sucking the powder into the transfer chambers could be adjusted within a predetermined speed range, for example, 300-1500ms/stroke. As shown in Fig. 2, the compressed gas control means 17 starts to control the compressed gas source to intermittently inject compressed gas into the transfer chamber at a constant flow rate at a first predetermined time, for example 25ms, after the piston reaches top dead center, and the piston starts downward stroke at a second predetermined time, for example 100ms, after the injection of compressed gas. Then, the injection of compressed gas is ceased at the above-mentioned first predetermined time before the piston reaches bottom dead center, and the piston starts upward stroke at the above-mentioned second predetermined time after the piston reaches bottom dead center. However, according to the different demands of the ratio of minimum to maximum powder delivery quantity, the piston speed could be adjusted within different ranges, and the first and second predetermined time could also be set according to actual demand.

The compressed gas control means controls the compressed gas source to intermittently inject compressed gas into the transfer chamber, but the total injection durations of compressed gas into the transfer chamber within each piston stroke cycle are the same at different piston speeds. For example, when the piston speed is 300ms/stroke, the total injection duration of compressed gas is 250ms. At this time, the compressed gas source continuously injects compressed gas into the transfer chambers at a constant flow rate. However, when the piston speed is 1500ms/stroke, the compressed gas source intermittently injects compressed gas into the transfer chamber with a ratio of operating period to rest period being set as 1:5. Thus, the total injection duration of compressed gas could be kept as 250ms. In another word, during each piston stroke cycle, the amounts of compressed gas injected into the individual transfer chamber are the same at different piston speeds.

Thus, the mixture ratio of compressed gas to powder in the transfer chamber could be kept constant, which could ensure constant and smooth delivery of powder at different piston speeds. In another word, in the case of the maximum powder delivery quantity at piston speed of 300ms/stroke or the minimum powder delivery quantity at piston speed of 1500ms/stroke, powder could be transported constantly and smoothly. As a result, the system according to the present invention could control the working window for the ratio of minimum to maximum powder delivery quantity to a wider range of 1:3 or above, and optimally to a ratio of either 1:4, 1:5, 1:6 or above.

Fig. 3 illustrates another embodiment of the control of the compressed gas control means to the injection of compressed gas. In general, the principle shown in Fig. 3 is similar to that shown in Fig. 2, i.e. the total amounts of compressed gas injected into the individual transfer chamber by the compressed gas source during each piston stroke cycle are the same at different piston speeds.

As shown in Fig. 3, the compressed gas control means 17 starts to control the compressed gas source to continuously inject compressed gas into the transfer chamber at a variable flow rate at the first predetermined time, for example 25ms, after the piston reaches top dead center, and the piston starts downward stroke at the second predetermined time, for example 100ms, after the injection of compressed gas. Then, the injection of compressed gas is ceased at the above-mentioned first predetermined time before the piston reaches bottom dead center, and the piston starts upward stroke at the above-mentioned second predetermined time after the piston reaches bottom dead center.

The variable flow rate of compressed gas is in proportion to the piston speed, to ensure the same amount of compressed gas injected into the individual transfer chamber during each piston stroke cycle. For example, when the piston speed is 300ms/stroke, compressed gas is injected into the transfer chamber at a relative higher flow rate. However, when the piston speed is 1500ms/stroke, compressed gas is injected into the transfer chamber at a relative lower flow rate. Thus, during each piston stroke cycle, the total amounts of compressed gas injected into the individual transfer chamber are the same at different piston speeds.

Thus, the mixture ratio of compressed gas to powder in the transfer chamber could be kept constant, which could ensure constant and smooth delivery of powder at different piston speeds. In another word, in the case of the maximum powder delivery quantity at piston speed of 300ms/stroke or the minimum powder delivery quantity at piston speed of 1500ms/stroke, powder could be transported constantly and smoothly. As a result, the system according to the present invention could control the working window for the ratio of minimum to maximum powder delivery quantity to a wider range of 1:3 or above, and optimally to a ratio of either 1:4, 1:5, 1:6 or above.

As shown in Fig. 4, with the powder transport system and method of the present invention, the powder flow rate could be almost linearly changed in accordance with the change of the piston speed, which proves that the powder transport system could ensure the constant and smooth delivery of powder at different piston speeds.

Although the description of the present invention is made with reference to the preferred embodiments, the present invention is not limited to these embodiments. Various modifications and changes can be made to the invention by those skilled in the art without departing from the spirit and scopes of the present invention.

## Claims

1. A powder transport method for transporting powder constantly and smoothly at different powder flow rates by means of a device, the device comprising a transfer chamber into which a supply line and a discharge line for the powder open; a piston movable in the transfer chamber for generating negative pressure therein; a compressed gas passage in communication with a compressed gas source and through which compressed gas is injected into the transfer chamber; and a compressed gas control means for controlling the compressed gas source to inject compressed gas into the transfer chamber, in which the powder is sucked into the transfer chamber by the movement of the piston from its initial position, and then compressed gas is injected into the transfer chamber and afterwards the piston returns to the initial position, where the method comprises:
the discharge line is in a closed state when the piston has reached top dead center in its stroke;
then the supply line is closed;
after waiting for a first predetermined time, compressed gas is injected into the transfer chamber continuously in one time segment or intermittently in several time segments according to piston speed in a manner that the total amounts of compressed gas injected are the same, and then the discharge line is opened;
after waiting for a second predetermined time, the piston starts its downward stroke;
at the first predetermined time before the piston has reached bottom dead center, the injection of compressed gas is ceased; and
the discharge line is closed and the supply line is opened.

2. The powder transport method according to claim 1, wherein compressed gas is injected into the transfer chamber intermittently at a constant flow rate.

3. The powder transport method according to claim 2, wherein compressed gas is injected into the transfer chamber intermittently in a manner that the total injection durations of compressed gas into the transfer chamber within each piston stroke cycle are the same at different piston speeds.

4. The powder transport method according to claim 1, wherein compressed gas is injected into the transfer chamber continuously at a variable flow rate.

5. The powder transport method according to claim 4, wherein the variable flow rate of compressed gas is in proportion to the piston speed.

6. The powder transport method according to one of claims 1-5, wherein the piston speed is adjustable in a predetermined range to ensure that the ratio of minimum to maximum powder delivery quantity is controlled to be 1:3 or above.

7. The powder transport method according to claim 6, wherein the ratio of minimum to maximum powder delivery quantity is 1:4, 1:5, 1:6 or above, the piston speed is adjustable in a range of 300-1500ms/stroke, and the first predetermined time is 25ms, while the second predetermined time is 100ms.

8. A powder transport system for transporting powder constantly and smoothly at different powder flow rates comprising a plurality of devices, where each device comprises:
a transfer chamber into which a supply line and a discharge line for the powder open;
a means for generating negative pressure in the transfer chamber which includes a piston movable in the transfer chamber;
a compressed gas passage in communication with a compressed gas source and through which compressed gas is injected into the transfer chamber; and
a compressed gas control means for controlling the compressed gas source to inject compressed gas into the transfer chamber to ensure that the total amount of compressed gas injected into the transfer chamber is the same at different piston speeds.

9. The powder transport system according to claim 8, wherein the compressed gas control means controls the compressed gas source to inject compressed gas into the transfer chamber continuously in one time segment or intermittently in several time segments.

10. The powder transport system according to claim 9, wherein the compressed gas control means controls the compressed gas source to inject compressed gas into the transfer chamber intermittently in a manner that the total injection durations of compressed gas into the transfer chamber within each piston stroke cycle are the same at different piston speeds.

11. The powder transport system according to claim 8, wherein the compressed gas control means controls the compressed gas source to inject compressed gas into the transfer chamber continuously at a variable flow rate.

12. The powder transport system according to claim 11, wherein the variable flow rate of compressed gas is in proportion to the piston speed.

13. The powder transport system according to claim 8 further comprising a control unit for ensuring non-synchronous reciprocal movement of the individual pistons.

14. The powder transport system according to one of claims 8-13, wherein the piston speed is adjustable in a predetermined range to ensure that the ratio of minimum to maximum powder delivery quantity is controlled to be 1:3 or above.

15. The powder transport system according to claim 14, wherein the ratio of minimum to maximum powder delivery quantity is 1:4, 1:5, 1:6 or above, and the piston speed is adjustable in a range of 300-1500ms/stroke.

16. The powder transport system according to one of claims 8-13, wherein each of the devices is connected to a common application station, and the number of the devices is two or more.

17. The powder transport system according to one of claims 8-13, wherein the compressed gas passage is in communication with the transfer chamber above bottom dead center of the piston, and the piston is connected to a drive unit.
